# EUROPEAN PATENT APPLICATION

(11) **EP 2 571 240 A2**
(43) Date of publication of application: **20.03.2013**
(21) Application number: 12183859.3
(22) Date of filing: 11.09.2012
(51) Int. Cl.: H04N 1/00

(54) **Image processing device, access control method and computer readable recording medium**

(30) Priority: 14.09.2011 JP 2011200104
(71) Applicant: Konica Minolta Business Technologies, Inc., Tokyo 100-7014 (JP)
(72) Inventor: Itoh, Ayumi, Tokyo, 100-7014 (JP); Hase, Junichi, Tokyo, 100-7014 (JP); Uchida, Hisashi, Tokyo, 100-7014 (JP); Nakano, Daisuke, Tokyo, 100-7014 (JP); Nakajima, Tomoaki, Tokyo, 100-7014 (JP)
(74) Representative: HOFFMANN EITLE

(57) **Abstract**

An image processing device (1), comprises: a display part (14a) on which various types of information are displayed; a storage part (13) for storing therein a variety of data; a first browser (35a) for accessing an external server (2) and acquiring a web page from the external server (2); a second browser (35b) for accessing the external server (2) and acquiring the web page from the external server (2), and that is permitted to access a predetermined storage region (24) in the storage part (13); a browser boot part (31) for starting up any one of the first and second browsers (35a, 35b); and a controller (33) for permitting an access request for the predetermined storage region (24) in response to receipt of the access request from the running browser (35) only when the browser (35) running by the browser boot part (31) is the second browser (35b).

## Description

This application is based on the application No. 2011-200104 filed in Japan, the contents of which are hereby incorporated by reference.

### TECHNICAL FIELD OF INVENTION

The present invention relates to an image processing device, an access control method and a computer readable recording medium.

### BACKGROUND ART

Conventional image processing devices called as MFPs are provided with multiple functions including a scan function and/or a print function. As one of the multiple functions is selected by a user, the image processing devices execute a job associated with the selected function. These conventional image processing devices transmit data generated by reading a document with the scan function to a document management system. This known technique is introduced for example in Japanese Patent Application Laid-Open No. 2006-99272. According to this technique, in response to receipt of the document data from the image processing device, the document management system sends an address (URL: Uniform Resource Locator) indicating a location where the data is stored to the image processing device and makes the data accessible on a web as a web page. As receiving an email attaching the address from the image processing device, a client computer connected through a network accesses the document management system by the address, thereby displaying the webpage made available by the document management system.

The conventional image processing devices as described above are currently being provided with a browser function to cause the web pages displayed in addition to the functions that execute jobs such as the scan function and/or the print function. When the user operates an operational panel to start a browser, the conventional image processing devices are capable of acquiring data published on the internet and displaying on the operational panel. This type of browser is capable of displaying the data on the operational panel not only the data acquired from outside such as on the internet, but also the data acquired by accessing the internal data stored in the image processing device such as in a hard disk device provided with the image processing device, for example.

The image processing devices such as MFPs are shared and used by multiple users. Many of the image processing devices store confidential information accessible only by a predetermined user in their internal hard disk devices. When the browser is started up by the user who is not authorized to access the confidential information, it is necessary to prevent the access to the confidential information by such user.

In order to prevent access to the confidential information by such user, the image processing device, for example, may include two browsers, a first browser with only a standard browser function and a second browser in which addresses (URLs) of the respective confidential information are registered in addition to being equipped with the standard browser function. When the user unauthorized to access the confidential information logs into such image processing device, the image processing device starts the first browser up. This helps preventing the confidential information from leaking out. For an access to the confidential information through the second browser by a user authorized to access the confidential information, the screens displayed on the image processing device are customized not to show the addresses registered with the second browser. So, such customized screens may prevent the addresses from being exposed to third parties through the display screens of the second browser.

Even with such customized screens, some users unauthorized to access the confidential information may find out the address registered with the second browser in some way. If, for example, the user unauthorized to access the confidential information finds out the address to access the confidential information, he or she may start up the first browser and enter the address in an address bar of the first browser by manual. That enables the user to access the confidential information through the first browser, and the confidential information may leak out. As described above, therefore, the sufficient security cannot be ensured just by simply switching the first and second browsers to start up in accordance with the authority of the user logging into the image processing device.

### TECHNICAL PROBLEM AND ITS SOLUTION

The present invention has been made in order to solve the above-described problems. The present invention is intended to provide an image processing device, an access control method and a computer readable recording medium that are capable of ensuring the security by restricting any unauthorized access even when a user unauthorized to access enters an address by manual.

First, the present invention is directed to an image processing device.

According to one aspect of the image processing device, the image processing device comprises: a display part on which various types of information are displayed; a storage part for storing therein a variety of data; a first browser for accessing an external server over a network and acquiring a web page from the external server, thereby causing the display part to display the acquired web page; a second browser for accessing the external server over the network and acquiring the web page from the external server, thereby causing the display part to display the acquired web page, and that is permitted to access a predetermined storage region in the storage part; a browser boot part for starting up any one of the first and second browsers. It is **characterized in that** the image processing device further comprises a controller for permitting an access request for the predetermined storage region in response to receipt of the access request from the running browser only when the browser running by the browser boot part is the second browser.

Second, the present invention is directed to an access control method for controlling an access to a predetermined storage region on an image processing device that includes a first browser accesses an external server over a network and acquires a web page from the external server, thereby causing a predetermined display part to display the acquired web page and a second browser which accesses the external server over the network and acquires the web page from the external server, thereby causing the display part to display the acquired web page and which is permitted to access the predetermined storage region.

According to one aspect of the access control method, it is **characterized in that** the access control method comprises the steps of: (a) starting up any one of the first and second browsers; and (b) permitting an access request for the predetermined storage region in response to receipt of the access request from the browser started up in the step (a) only when the running browser is the second browser.

Third, the present invention is directed to a computer readable recording medium on which a program is recorded executable by an image processing device that includes a first browser accesses an external server over a network and acquires a web page from the external server, thereby causing a predetermined display part to display the acquired web page and a second browser which accesses the external server over the network and acquires the web page from the external server, thereby causing the display part to display the acquired web page and which is permitted to access a predetermined storage region.

According to one aspect of the computer readable recording medium, it is **characterized in that** the program causes the image processing device to execute the steps of: (a) starting up any one of the first and second browsers; and (b) permitting an access request for the predetermined storage region in response to receipt of the access request from the browser started up in the step (a) only when the running browser is the second browser.

### BRIEF DESCRIPTION OF DRAWINGS

Fig. 1 shows an exemplary network configuration including an image processing device;
Fig. 2 is a block diagram showing the hardware configuration of the image processing device;
Fig. 3 is a block diagram showing an exemplary functional configuration realized while the program is being ran by the CPU of the image processing device;
Fig. 4 shows an example of user information;
Fig. 5 is a block diagram showing an exemplary functional configuration realized while a browser is being ran by a browser boot part;
Fig. 6 shows an example of a display screen image displayed on a display unit when a first browser is started up;
Fig. 7 shows an example of the display screen image displayed on the display unit when a second browser is started up;
Fig. 8 is a flow diagram explaining an exemplary main procedure of a process performed to start up the browser in the image processing device;
Fig. 9 is a flow diagram explaining an exemplary procedure of a process as to an access control performed by a controller while the browser is running;
Figs. 10A and 10B are block diagrams showing exemplary concepts of the access control performed by the controller while the first browser is running;
Figs. 11A and 11B are block diagrams showing exemplary concepts of the access control performed by the controller while the second browser is running;
Fig. 12 shows an example of the storage region which is inaccessible to an unauthorized user with individual storage regions for the respective users;
Fig. 13 is an example of the display screen image displayed on the display unit to perform the user authentication for the access to the storage region by the second browser;
Fig. 14 is an example of the display screen image displayed on the display unit for download of a file by the second browser;
Fig. 15 is an example of the display screen image displayed on the display unit when the second browser makes the printed outputs produced with the pull printing; and
Fig. 16 is an example of the display screen image displayed on the display unit for scan transmission by the second browser.

### EMBODIMENTS OF INVENTION

A preferred embodiment of the present invention is described in detail below with reference to figures. In the description given below, those elements which are shared in common in the preferred embodiment are represented by the same reference numerals, and are not discussed repeatedly for the same description.

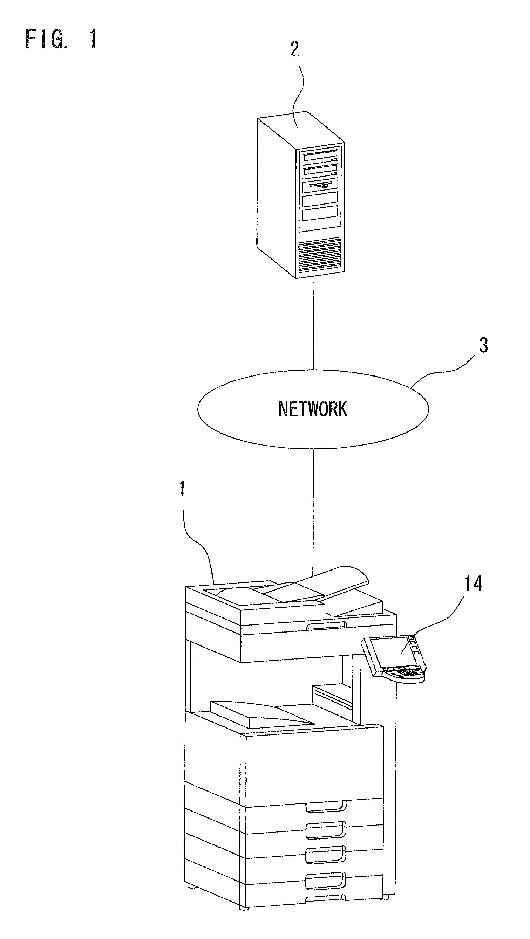

Fig. 1 shows an exemplary network configuration including an image processing device 1 of the present preferred embodiment. The image processing device 1 is a device generally called by names such as MFPs having several functions such as a copy function, a scan function, a print function and a facsimile function. The image processing device 1 executes jobs specified by a user in connection with each of the functions such as the copy function, the scan function, the print function and the facsimile function.

The image processing device 1 is provided with an operational panel 14 which is a user interface on the front side of the image processing device 1. The user operates the operational panel 14 to select a desired function of the several functions, thereby giving an instruction on execution of a job corresponding to the selected function.

The image processing device 1 is connected to a network 3 such as LAN (Local Area Network). The network 3 may include a wide area network such as an internet. A web server 2 is also connected to the network 3 as well as the image processing device 1.

The web server 2 is a server device that provides a web page in response to an access request from outside. To be more specific, the web server 2 stores therein a plurality of hierarchically-structured web pages. Each of the plurality of web pages has its own address (URL: Uniform Resource Locator). In response to a request to access a certain address through the network 3, the web server 2 outputs the web page that is assigned to the address.

The web server 2 has a feature as a file server that manages files such as document data, for example. The web server 2 is capable of storing the files received over the network 3 or sending the ones already stored therein in response to the request from outside.

The image processing device 1 is capable of accessing the web server 2 through the network 3 and displaying the web page provided by the web server 2 on the operational panel 14 with the browser function. The image processing device 1 is also capable of downloading files from the web server 2 and producing the files as printed outputs, and uploading image data generated by reading a document with the scan function to the web server 2.

The image processing device 1 is connected with a computer which is not shown in Fig. 1 through the network 3 besides the web server 2. When receiving print data from the computer, the image processing device 1 activates the print function and produces printed outputs based on the received print data. More than one above-described web servers 2 may be connected to the network 3.

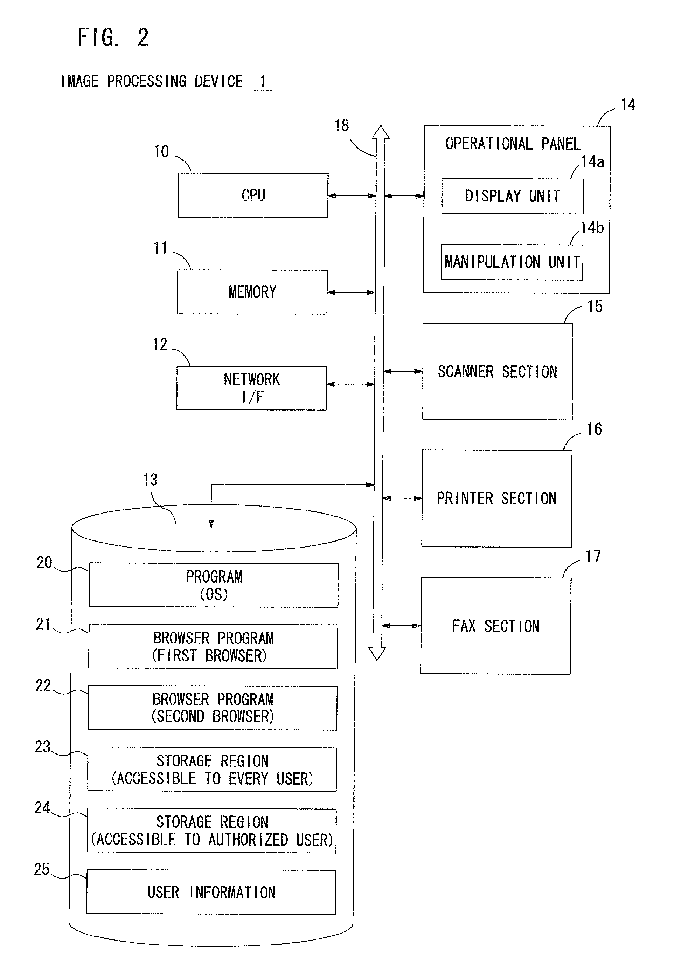

Fig. 2 is a block diagram showing the hardware configuration of the image processing device 1. As illustrated in Fig. 2, the image processing device 1 has its hardware configuration including a CPU 10, a memory 11, a network interface 12, a storage device 13, the operational panel 14, a scanner section 15, a printer section 16 and a fax section 17. Those parts are connected together to allow data communication therebetween via a data bus 18.

The CPU 10 reads and executes a variety of pre-installed programs in the storage device 13, thereby controlling operations of each part. The memory 11 is, for example, a volatile storage device that stores therein data such as temporary data required when the CPU 10 executes the variety of programs.

The network interface 12 is a communication part via which the image processing device 1 establishes data communication with outside over the network 3. The CPU 10 establishes data communication with the web server 2 and/or other devices connected to the network 3 via the network interface 12.

The storage device 13 is a nonvolatile storage device such as a hard disk drive (HDD) or a solid state drive (SSD), for example. The storage device 13 stores therein a pre-installed program 20 and browser programs 21 and 22 to be executed by the CPU 10.

The program 20 is a basic program executable to control basic operations in response to the copy function, the scan function, the print function and the facsimile function in the image processing device 1. As the image processing device 1 being powered on, the CPU 10 automatically reads and executes the program 20. So, the program 20 is an operating system (OS) of the image processing device 1.

Each of the browser programs 21 and 22 adds the browser function to the image processing device 1. The browser programs 21 and 22 are application programs additionally executed while the program 20 is being executed by the CPU 10. The CPU 10 becomes operative to function as a browser by executing the browser programs 21 and 22. More in detail, the browser program 21 is capable of making the CPU 10 become operative to function as a first browser and the browser program 22 is capable of making the CPU 10 become operative to function as a second browser.

The first browser functions as a general browser. The first browser accesses the address (URL) specified by the user in response to the user's instruction operated on the operational panel 14 and acquires the web page of the address, thereby displaying the acquired web page on the operational panel 14. The second browser functions as the general browser as well as the first browser. In addition to the function as the general browser, the second browser works in concert with each function on the image processing device 1.

The CPU 10 reads and executes either one of two types of browser programs 21 and 22 in the storage device 13, thereby putting either of the first and second browsers in operation to function.

The image processing device 1 of the present preferred embodiment controls which one of the first and second browsers should be started up based on the authorization of the user logging into the image processing device 1 as described later. The second browser may be started up only when a predetermined user is logging in.

The storage device 13 has more than one storage regions 23 and 24 to store various types of data therein. The storage region 23 of the more than one storage regions 23 and 24 is shared by all users, which means the storage region 23 is accessible to authorized and unauthorized users, for example. On the other hand, the storage region 24 is shared only by the predetermined user, which means the storage region 24 is inaccessible to the unauthorized users, for example. A web page accessible to only the predetermined user and/or other confidential information is stored in the storage region 24, for instance.

The storage device 13 stores therein user information 25 in which information about one or more user authorized to use the image processing device 1 is registered in advance.

The operational panel 14 is the user interface operable to the user in use of the image processing device 1. The operational panel 14 includes a display unit 14a on which various types of information are displayed and a manipulation unit 14b which receives entries by the user. The display unit 14a is formed from a device such as a color liquid crystal display, for example. The manipulation unit 14b has a plurality of operation keys including both touch panel keys arranged on a screen of the display unit 14a and push-button keys arranged around the screen, for example.

The scanner section 15 is put into operation when the copy function or the scan function is selected and an instruction to execute a job associated with the selected function is received. The scanner section 15 reads images of a document and generates image data.

The printer section 16 is put into operation when the copy function or the print function is selected and an instruction to execute a job associated with the selected function is received. The printer section 16 produces a printed output based on the entered print data (image data). The printer section 16 is also capable of producing the printed output based on fax data in response to receipt of the fax data by the fax section 17.

The fax section 17 executes jobs relating to the facsimile function. The fax section 17 transmits and receives the fax data through telephone lines not shown in Fig. 2.

As the image processing device 1 having the above configuration is powered on, the CPU 10 starts off by reading and executing the program 20 in the storage device 13.

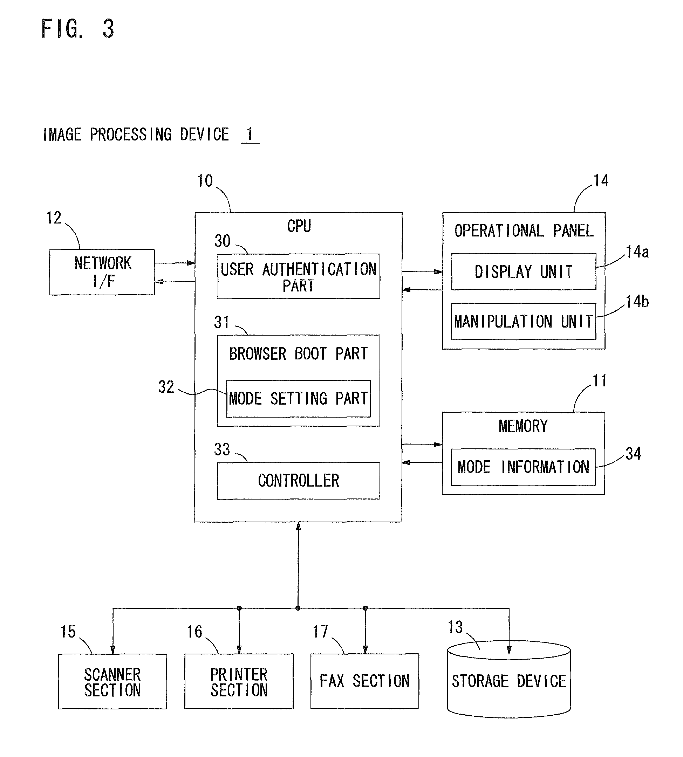

Fig. 3 is a block diagram showing an exemplary functional configuration realized while the program 20 is being ran by the CPU 10. As shown in Fig. 3, in response to the execution of the program 20, the CPU 10 serves as a user authentication part 30, a browser boot part 31 and a controller 33.

The user authentication part 30 authenticates the user who uses the image processing device 1. The user authentication part 30 identifies the user by determining whether or not any information registered as the user information 25 matches information entered by the user through the operational panel 14.

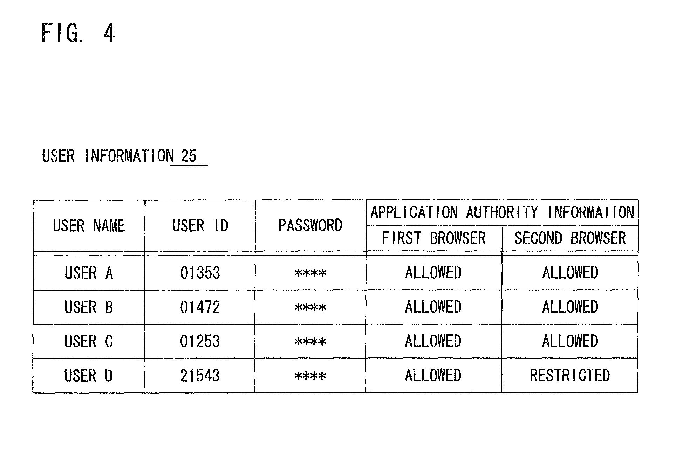

Fig. 4 shows an example of the user information 25. As seen in Fig. 4, information about the plurality of users is registered as the user information 25. More specifically, the user information 25 contains information of a user name, a user ID, a password and the authority to use applications (hereafter, application authority information) registered for each user. The user name, the user ID and the password are identification information to identify each user. The application authority information shows whether or not the user is authorized to use each of the first and the second browser, respectively. According to the example of Fig. 4, all of the users A, B and C are authorized to use both the first and the second browsers. The user D is authorized to use the first but not the second browser.

In response to receipt of the user ID and password through the operational panel 14, for example, the user authentication part 30 determines whether or not information matching the received pair of the user ID and password is registered as the user information 25. If any information matching the pair is registered as the user information 25, the authentication results in success. The authentication part 30 may identify the user who is using the image processing device 1. The user successfully identified by the user authentication part 30 is a log-in user by whom the image processing device 1 is logged in. If no information matching the pair of the user ID and password is registered as the user information 25, the authentication results in failure.

The browser boot part 31 reads and executes the browser program 21 or 22 after the image processing device 1 is put into a logged-in state, thereby starting up the first or the second browser. The browser boot part 31 may execute the browser program 21 or 22 the same time as when the image processing device 1 is put into the logged-in state or when an instruction to activate the browser function is given by the logged-in user. The browser boot part 31 starts up the first or the second browser, and the browser function is put into operation on the image processing device 1.

For putting the browser function into operation, the browser boot part 31 reads the user information 25 and determines whether or not the logged-in user is authorized to use each of the first and the second browsers. When determining that the logged-in user is not authorized to use the second browser, the browser boot part 31 reads and executes the browser program 21 to start the first browser up. When the logged-in user is authorized to use the second browser, the browser boot part 31 reads and executes the browser program 22 to start the second browser up. The browser boot part 31 may execute the browser program 21 to start the first browser up when the first browser is selected by the logged-in user even if he or she is authorized to use the second browser.

As illustrated in Fig. 3, the browser boot part 31 includes a mode setting part 32. The mode setting part 32 generates mode information 34 when the browser is started up by the browser boot part 31. The mode information 34 shows which one of the first and the second browsers should be started up. For starting up the first browser, for example, the mode setting part 32 generates the mode information 34 containing a value of "1" set, and for starting up the second browser, the mode setting part 32 generates the mode information 34 containing a value of "2" set. The mode information 34 generated by the mode setting part 32 is saved temporarily on the storage such as the memory 11 by the browser boot part 31. The mode information 34 saved on the storage such as the memory 11 is deleted when the browser completes running.

The controller 33 controls not only operations of the scanner section 15, the printer section 16 and the fax section 17 but also operations to read and write data in the storage device 13. The controller 33 is configured to manage accesses to the respective data stored in the storage device 13. As receiving a request to access the storage region 24 which is accessible to only the predetermined user, the controller 33 determines whether to permit or refuse the access request.

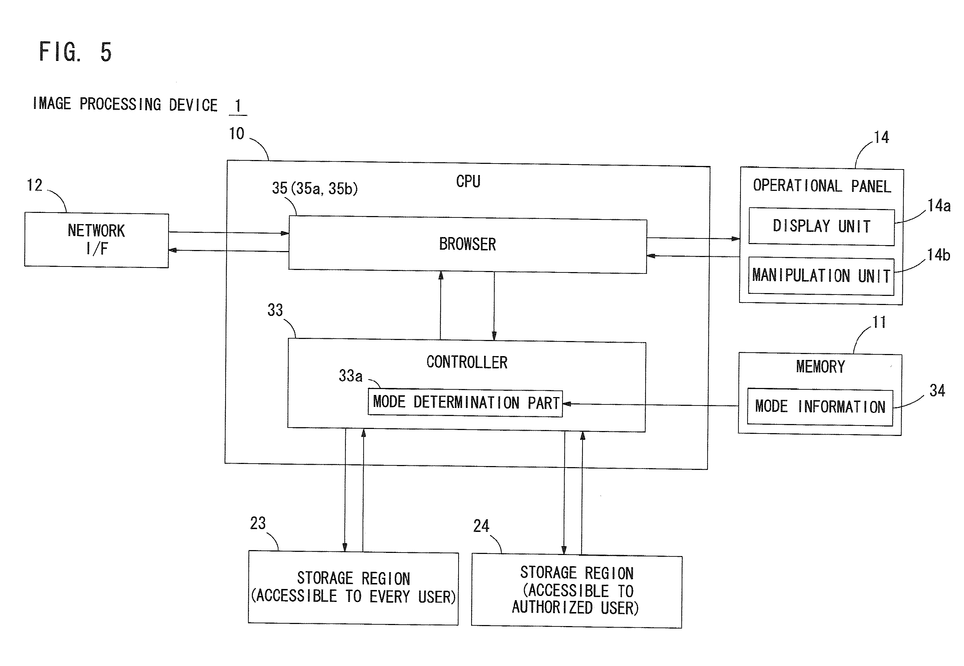

Fig. 5 is a block diagram showing an exemplary functional configuration realized while a browser 35 is being ran by the browser boot part 35. In response to startup of either one of a first browser 35a and a second browser 35b by the browser boot part 35, the browser 35 in the CPU 10 is put into operation. A display screen image (web page) acquired by the browser 35 is then displayed on the display unit 14a of the operational panel 14. More specifically, the browser 35 accesses the address (URL) specified by the user based on the operation made with the manipulation unit 14b of the operational panel 14 and acquires the data of the address to display on the display unit 14a, thereby displaying the data on the display unit 14a.

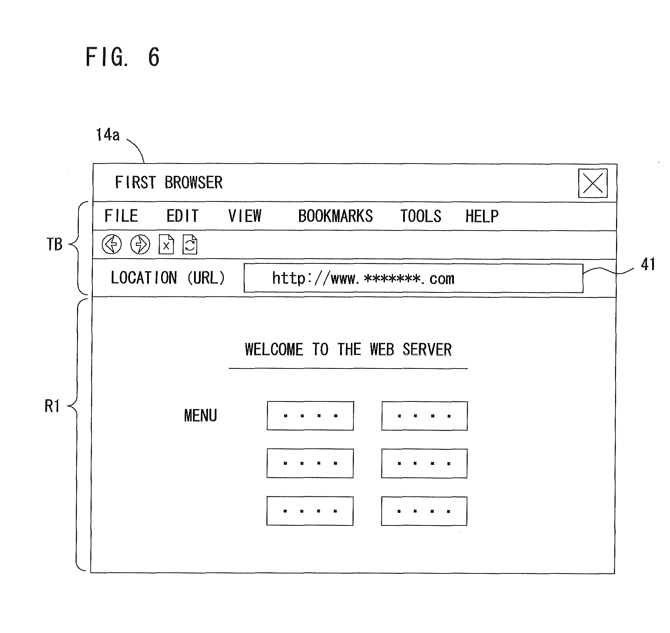

Fig. 6 shows an example of the display screen image displayed on the display unit 14a when the first browser 35a is started up. The first browser 35a is one of the general browsers. The display screen image displayed on the display unit 14a by the first browser 35a includes a toolbar TB placed on the top of the screen and a display area R1 on which various types of information acquired by the first browser 35a is displayed is placed in the lower part of the screen under the tool bar TB. The toolbar TB has an address bar 41 which shows the current address. An address to be accessed at the startup is set as default with the first browser 35a. As the first browser 35a is started up, the address is shown by default in the address bar 41. A web page of the default address is acquired and displayed on the display area R 1. If the user operates the operational panel 14 to enter the address of a page that the user wishes to visit into the address bar 41, the first browser 35a is made operative to access the address specified by the user. The user is free to configure the address set in advance as default with the first browser 35a. An address to access the web server 2 may be set, for instance.

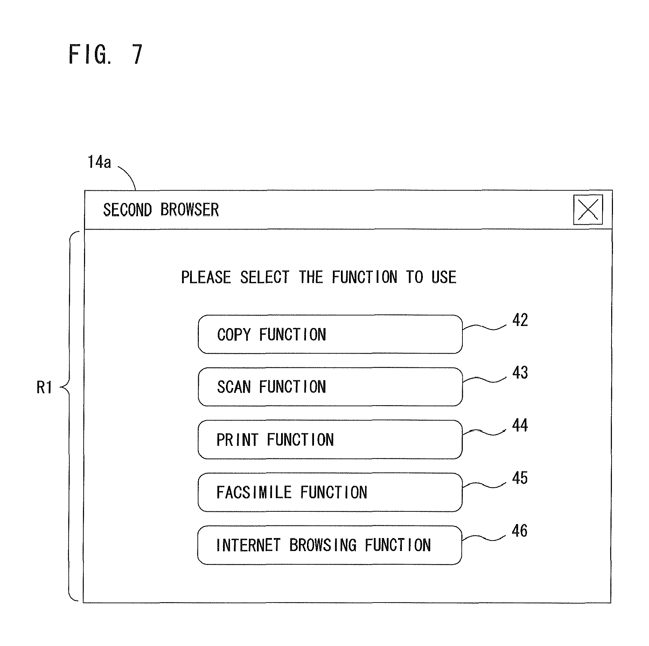

Fig. 7 shows an example of the display screen image displayed on the display unit 14a when the second browser 35b is started up. As already described, the second browser 35b has a feature as one of the general browsers and a function to operate cooperative with the respective functions such as the copy function, the scan function, the print function and the fax function on the image processing device 1. The display screen image displayed on the display unit 14a by the second browser 35b includes the display area R1 on which various types of information such as the web page acquired by the second browser 35b is displayed is placed in whole screen as shown in Fig. 7. The display screen image displayed by the second browser 35b has been customized in advance, and the toolbar TB such as the display screen image (see Fig. 6) displayed by the first browser 35a is not displayed on the screen.

As being started up by the CPU 10, the second browser 35b accesses the address set in advance and acquires the display screen image such as the web page of the address, thereby displaying the display screen image on the display area R1. The address that the second browser 35b accesses at the startup is set in advance by an administrator, or the like of the image processing device 1. So, each user is not allowed to change the settings by his or her own will. The address to be accessed at the startup may be an internal address of the image processing device 1 or an external address that the image processing device 1 accesses over the network 3. The internal address may be an address of the storage region 23 accessible to all users or the address of the storage region 24 accessible only to the authorized user in the storage device 13, for example.

After being started up by the CPU 10, the second browser 35b acquires the display screen image (web page) of the address set in advance as described above and displays as shown in Fig. 7. This display screen image works together with the respective functions on the image processing device 1. So, for instance, the user may select one of the various functions on the image processing device 1, configure the settings relating to the selected function or give an instruction on execution of a job with the display screen image.

The display screen image of Fig. 7 shows a button 42 to select the copy function, a button 43 to select the scan function, a button 44 to select the print function, a button 45 to select the facsimile function and a button 46 to select an internet browsing function (a general function of the browser). The user selects and presses the desired one of the buttons 42, 43, 44, 45 and 46 shown in the display screen image, thereby selecting the function he or she wishes to use.

When the button 43 to select the scan function is pressed by the user, for example, the second browser 35b accesses another address linked to the button 43 and acquires the display screen image on the detail settings of the scan function of the address. The second browser 35b then updates the display area R1. The same process is performed when the other functions are selected by the user.

In response to receipt of the operation to configure settings relating to the respective functions on the image processing device 1 or the instruction on execution of the job, for example, the second browser 35b outputs an operation signal to the controller 33. The controller 33 performs processing including that to change a configuration parameter in respect to the respective functions or to start the execution of the job based on the operation signal received from the second browser 35b.

After the browser 35 of the CPU 10 is started up, the browser 35 accesses a variety of addresses based on the user's instruction received through the operational panel 14. The address specified by the user may be the internal address of the image processing device 1 and the one to access the storage region 23 or 24. In this case, the browser 35 outputs the access request to the controller 33.

While the browser 35 of the CPU 10 is running, the controller 33 monitors the access request from the browser 35. In response to the access request for the storage region 24 which is inaccessible to the unauthorized user from the browser 35, the controller 33 reads the mode information 34 temporarily saved on the storage such as the memory 11 and determines that the running browser 35 is either the first browser 35a or the second browser 35b based on the read mode information 34 (a mode determination part 33a of Fig. 5). When determining that the second browser 35b is running, the controller 33 permits the access request from the second browser 35b. When determining that the first browser 35a is running, the controller 33 refuses the access request from the first browser 35a. The controller 33 is configured to permit the access request for the storage region 24 which is inaccessible to the unauthorized user only when the second browser 35b of the CPU 10 is running.

As receiving the access request for the storage region 23 which is accessible to every user from the browser 35, the controller 33 permits the access request without the determination based on the mode information 34. To be more specific, the controller 33 permits the access request for the storage region 23 which is accessible to every user without fail in both cases where the first browser 35a of the CPU 10 is running and where the second browser 35b of the CPU 10 is running.

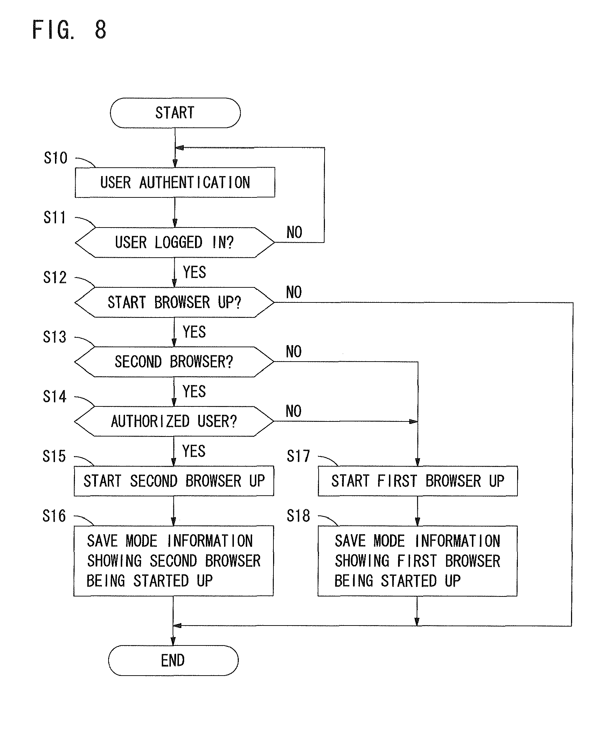

Next, a process performed by the above-described CPU 10 is explained. Fig. 8 is a flow diagram explaining an exemplary procedure of a process performed to start up the browser 35 of the CPU 10. The process is performed in response to execution of the program 20 by the CPU 10. After the image processing device 1 is powered on and the CPU 10 executes the program 20, the image processing device 1 is put into a waiting state for receipt of the information including the user ID and password entered by the user. As receiving the information including the user ID and password, the CPU 10 puts the user authentication part 30 into operation to perform the user authentication (step S10). The CPU 10 determines whether or not to put the image processing device 1 into the logged-in state based on the result of the user authentication (step S11). When the user authentication results in failure and determining not to put the image processing device 1 into the logged-in state (when a result of step S11 is NO), the CPU 10 reverts back to the initial state (step S10). When the user authentication results in success and determining to put the image processing device 1 into the logged-in state (when a result of step S11 is YES), the CPU 10 proceeds to step 512.

As proceeding to step S12, the CPU 10 determines whether or not to start the browser 35 up (step S12). If the browser 35 is configured to start up automatically together with the image processing device 1 being put into the logged-in state, for example, the CPU 10 determines YES as a result of step S12. Even when the browser 35 is not configured as described above, an instruction to start up the browser 35 may be given by the logged-in user. In such a case, the CPU 10 also determines YES as a result of step S12. When starting the browser 35 up (when a result of step S12 is YES), the CPU 10 further determines whether or not to start up the second browser 35b (step S13). In step S13, if the instruction to start up the browser 35 is given by the user, for example, the CPU 10 determines whether or not the browser 35 specified by the user is the second browser 35b. As the second browser 35b is specified to start up (when a result of step S13 is YES), the CPU 10 reads the user information 25 and refers to the application authority information defined for the logged-in user. The CPU 10 then determines whether or not the logged-in user is authorized to use the second browser 35b (step S14).

If the logged-in user is authorized to use the second browser 35b (when a result of step S14 is YES), the CPU 10 causes the browser boot part 31 to start up the second browser 35b (step S15). The CPU 10 then generates the mode information 34 showing the second browser 35b is started up and saves the generated mode information 34 on the certain storage region such as the memory 11 (step S16).

If the logged-in user is not authorized to use the second browser 35b (when a result of step S14 is NO), the CPU 10 causes the browser boot part 31 to start up the first browser 35a (step S17). The process in step S17 is also performed when the browser 35 specified by the logged-in user is the first browser 35a (when a result of step S13 is NO). The CPU 10 then generates the mode information 34 showing that the first browser 35a is started up and saves the generated mode information 34 on the certain storage region such as the memory 11 (step S18).

As the above-described process is performed by the CPU 10, either one of the first browser 35a and the second browser 35b is started up. In response to the startup of either one of the first browser 35a and the second browser 35b, the mode information 34 showing which browser is running is saved on the certain storage region such as the memory 11.

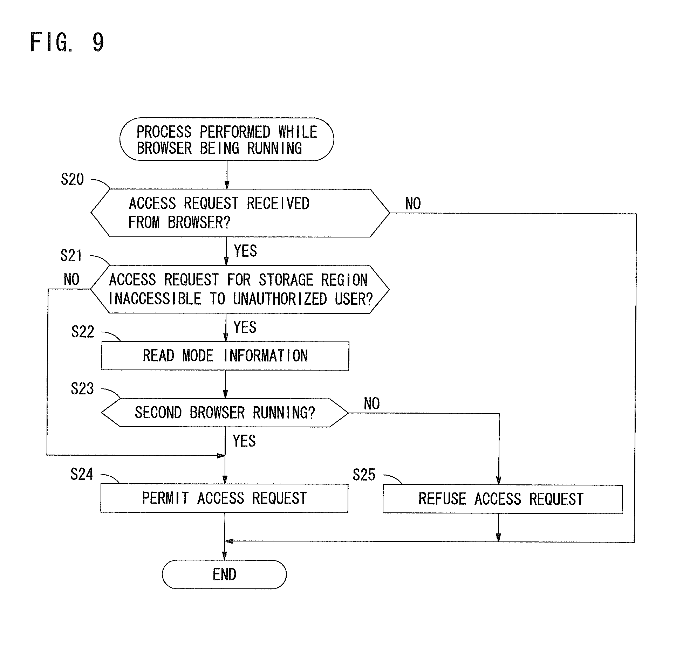

Fig. 9 is a flow diagram explaining an exemplary procedure of a process as to an access control performed by the controller 33 while the browser 35 is running. The process is performed also in response to execution of the program 20 by the CPU 10. The process is performed every predetermined period of time on a regular basis by the controller 33 while the browser 35 is running. Upon the start of the process, the controller 33 determines whether or not the access request for the storage region 23 or 24 is received from the browser 35 (step S20). When no access request is received from the browser 35 (when a result of step S20 is NO), this process ends.

When the access request is received from the browser 35 (when a result of step S20 is YES), the controller 33 determines whether or not the access request is for the storage region 24 which is inaccessible to the unauthorized user (step S21). If the access request is for the storage region 24 which is inaccessible to the unauthorized user (when a result of step S21 is YES), the controller 33 reads the mode information 34 saved in the certain storage region such as the memory 11 (step S22) and determines whether or not the running browser 35 of the CPU 10 is the second browser 35b (step S23). As determining that the second browser 35b is running (when a result of step S23 is YES), the controller 33 permits the access request (step S24). As determining the running browser 35 of the CPU 10 is the first browser 35a (when a result of step S23 is NO), the controller 33 refuses the access request (step S25).

If the access request from the browser 35 is for the storage region 23 which is accessible to every user (when a result of step S21 is NO), the controller 33 permits the access request (step S24).

The storage region 24 which is inaccessible to the unauthorized user is sometimes tried to be accessed by the first browser 35a while the first browser 35a is running. In such a case, the controller 33 may block the access by performing the above-described process. For the access to the storage region 23 which is accessible to every user from the first browser 35a, the controller 33 permits. Even the first browser 35a, therefore, may acquire the data in the storage region 23 and make the acquired data displayed on the display unit 14a.

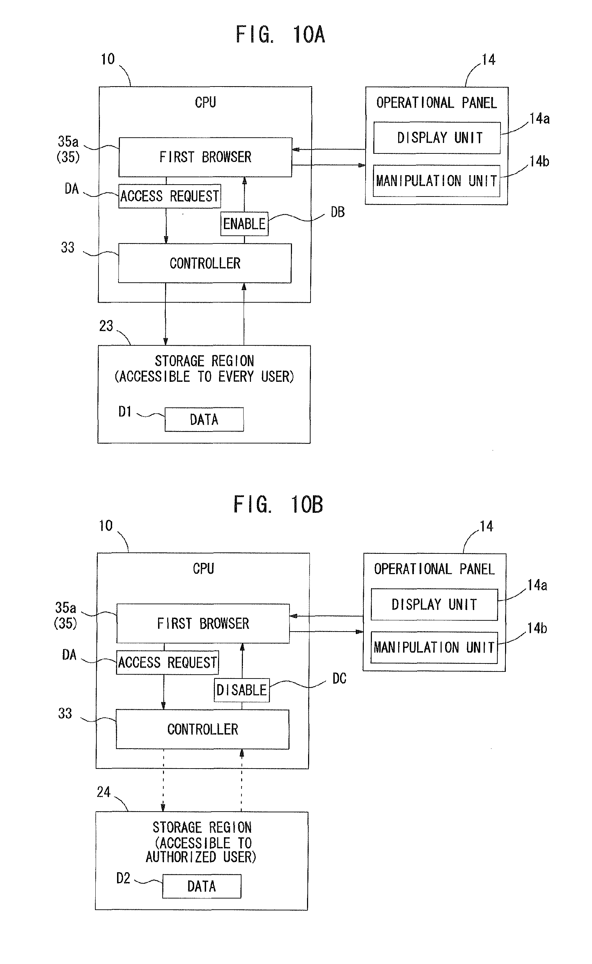

Figs. 10A and 10B are block diagrams showing exemplary concepts of the access control performed by the controller 33 while the first browser 35a is running. Fig. 10A shows an example where the address to access data D1 in the storage region 23 which is accessible to every user is entered in the address bar 41 by the logged-in user, for instance, while the first browser 35a is running. In this case, the first browser 35a outputs an access request DA for the storage region 23 to the controller 33. The controller 33 analyzes the access request DA from the first browser 35a. As determining the request is for accessing the storage region 23 which is accessible to every user, the controller 33 outputs an enabling signal DB to permit the access to the first browser 35a. As a result, the first browser 35a is allowed to access the storage region 23 via the controller 33 and reads the data D1 to make the read data displayed on the display unit 14a.

Fig. 10B shows an example where the address to access data D2 in the storage region 24 which is inaccessible to the unauthorized user is entered in the address bar 41 by the logged-in user, for instance, while the first browser 35a is running. In this case, the first browser 35a outputs the access request DA for the storage region 24 to the controller 33. The controller 33 analyzes the access request DA from the first browser 35a and determines that the request is for accessing the storage region 24 which is inaccessible to the unauthorized user. As identifying the running browser 35 is the first browser 35a, the controller 33 outputs a disabling signal to refuse the access to the first browser 35a. As a result, the first browser 35a is restricted to access the storage region 24 via the controller 33 and read the data D2 stored in the storage region 24.

With the user information 25 as shown in Fig. 4 registered, for example, the image processing device 1 is used by the user D. In such a case, the access is controlled in the image processing device 1 as described with Figs. 10A and 10B. Even when the user D enters by manual the address to access the storage region 24 into the address bar 41 of the first browser 35a, he or she is not allowed to access the data D2 stored in the storage region 24.

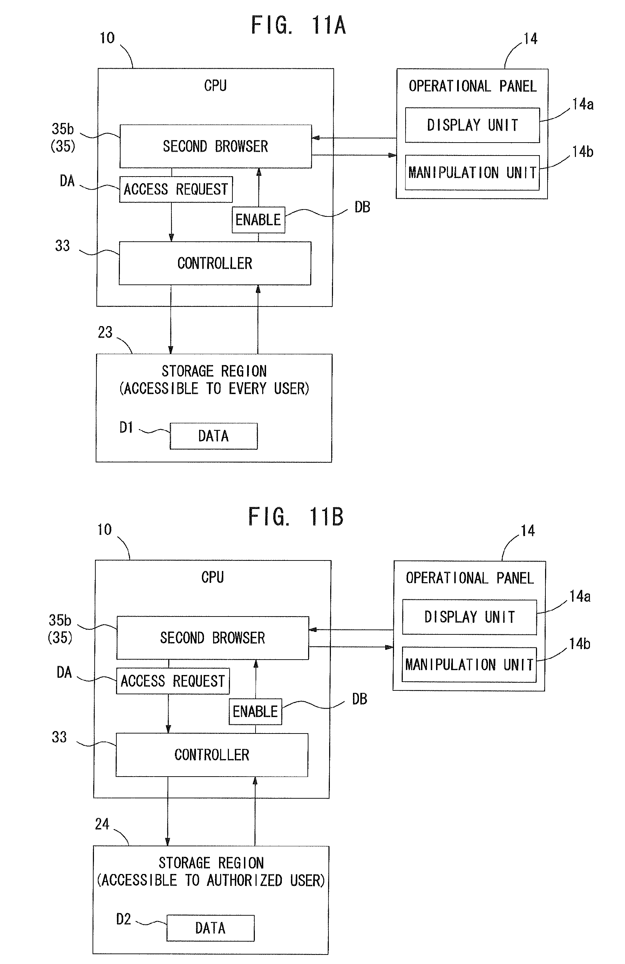

Figs. 11A and 11B are block diagrams showing exemplary concepts of the access control performed by the controller 33 while the second browser 35b is running. Fig. 11A shows an example where the operation to access the data D1 in the storage region 23 which is accessible to every user is made by the logged-in user, for instance, while the second browser 35b is running. In this case, the second browser 35b outputs the access request DA for the storage region 23 to the controller 33. The controller 33 analyzes the access request DA from the second browser 35b. As determining the request is for accessing the storage region 23 which is accessible to every user, the controller 33 outputs the enabling signal to permit the access to the second browser 35b. As a result, the second browser 35b is allowed to access the storage region 23 via the controller 33 and reads the data D1 to make the read data D1 displayed on the display unit 14a.

Fig. 11B shows an example where the operation to access the data D2 in the storage region 24 which is inaccessible to the unauthorized user is made by the logged-in user, for instance, while the second browser 35b is running. In this case, the second browser 35b outputs the access request DA for the storage region 24 to the controller 33. The controller 33 analyzes the access request DA from the second browser 35b and determines that the request is for accessing the storage region 24 which is inaccessible to the unauthorized user. As identifying the running browser 35 is the second browser 35b, the controller 33 outputs the enabling signal DB to permit the access to the second browser 35b. As a result, the second browser 35b is allowed to access the storage region 24 via the controller 33 and read the data D2 to make the read data D2 displayed on the display unit 14a.

With the user information 25 of Fig. 4 registered, for example, the image processing device 1 may be used by the users A, B and C. In such a case, the access is controlled in the image processing device 1 as described with Figs. 11A and 11B. The users A, B and C are allowed to access both the data D1 and D2 stored in the respective storage regions 23 and 24.

The image processing device 1 of the present preferred embodiment is capable of preventing the data D2 stored in the storage region 24 which is inaccessible to the unauthorized user being read by the first browser 35a successfully when the first browser 35a is running. To be more specific, even when the address to access the storage region 24 is entered into the address bar 41 of the first browser 35a by the user by manual while the first browser 35a is running, the access may be refused. In a case where the data D2 stored in the storage region 24 is the confidential information, the image processing device 1 allows to prevent the confidential information from being accessed by the user who is not authorized to access.

On the other hand, in a case where the image processing device 1 is logged in by the user who is authorized to access the confidential information, the second browser 35b is allowed to start up. The startup of the second browser 35b enables the logged-in user to access the data D2 in the storage region 24. In this case, the display screen image of the second browser 35a is customized not to show the address of the storage in which the data D2 is stored. The data D2 is displayed in a way that the address thereof is successfully prevented from being shown to the third parties.

This second browser 35b actually accesses the data D2 in the storage region 24 after the access to the storage region 24 which is inaccessible to the unauthorized user is permitted by the controller 33. At the access, the user authentication may be performed corresponding to the storage region in which the data D2 is stored.

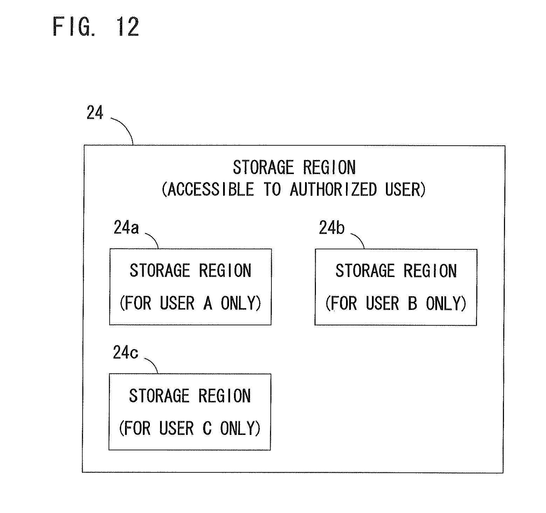

Fig. 12 shows an example of the storage region 24 which is inaccessible to the unauthorized user with individual storage regions 24a, 24b and 24c for the respective users included. As an example of Fig. 12, the plurality of storage regions 24a, 24b and 24c for each user is provided under the storage region 24. The user ID and password set by each user individually is registered with the respective storage regions 24a, 24b and 24c. When the second browser 35b tries to access any one of the storage regions 24a, 24b and 24c, the user authentication is performed based on the user ID and password registered with the storage region that the second browser 35b tries to access.

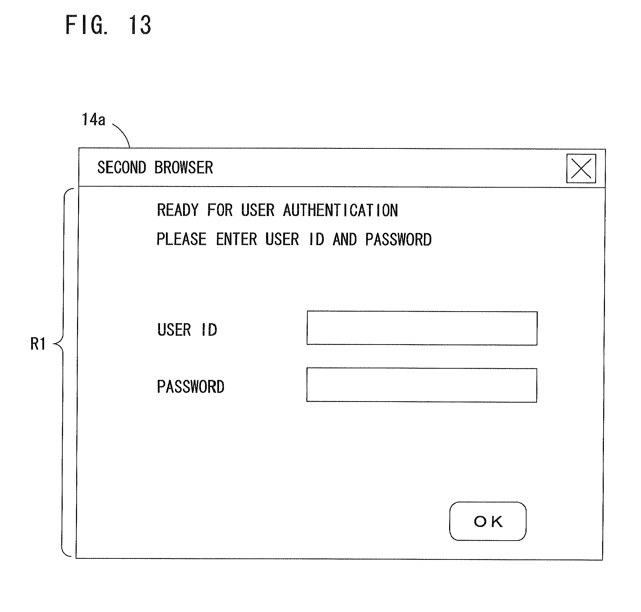

Fig. 13 is an example of the display screen image displayed on the display unit 14a to perform the user authentication for access to the storage region 24a, 24b or 24c by the second browser 35b. This display screen image is stored in advance in a predetermined storage region in the storage device 13 as the web page, for example. The second browser 35b acquires the display screen image automatically and makes the acquired display screen image displayed on the display unit 14a. The display screen image shows a field for entry of the user ID and one for entry of the password as illustrated in Fig. 13. The user enters the user ID and the password into the respective fields and presses an OK button. The second browser 35b then authenticates the user. So, the second browser 35b reads the user ID and password registered with the storage region which is selected among from the plurality of storage regions 24a, 24b and 24c by the user as he or she wishes to access. The second browser 35b determines whether or not the user ID and password entered through the display screen image by the user match the read user ID and password. If the pairs of the user ID and password match with each other, the access to the selected storage region that the user wishes to access is permitted and the second browser 35b starts to access. If the pairs of the user ID and password do not match with each other, the second browser 35b does not start to access the selected storage region that the user wishes to access.

As described above, the storage region 24 which is inaccessible to the unauthorized user may include one or more storage regions accessible to only the respective users. In this case, the second browser 35b authenticates the user, thereby preventing the access to the storage region by the user other than the logged-in user.

The user authentication performed by the second browser 35b is the secondary authentication process that is performed after the authentication of the user who uses the image processing device 1 by the user authentication part 30 as described above. This secondary authentication process is performed by the second browser 35b when the second browser 35b is running. So, it is not required to put the user authentication part 30 again into operation while the second browser 35b is running, resulting in improvement in process efficiency.

The second browser 35b does not have to perform the secondary user authentication as described above at the time when any one of the plurality of storage regions 24a, 24b and 24c is selected by the logged-in user as the one he or she wishes to access. The second browser 35b may perform the above-described secondary user authentication in advance at the startup thereof, for instance.

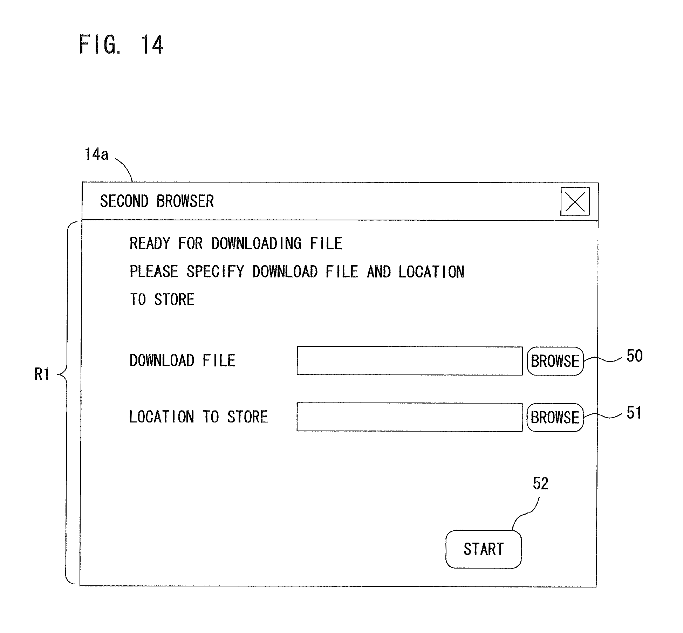

The second browser 35b is capable of downloading a file stored on the web server 2 over the network 3 and stores the downloaded file in the storage region 24, for example. Fig. 14 is an example of the display screen image displayed on the display unit 14a for download of the file by the second browser 35b. This display screen image is stored in advance in the predetermined storage region in the storage device 13 as the web page, for example. The second browser 35b acquires the display screen image automatically and makes the acquired display screen image displayed on the display unit 14a. The display screen image may be provided by the web server 2.

The display screen image of Fig. 14 shows browse buttons 50 and 51 and a start button 52. The browse button 50 is operated by the logged-in user when he or she wishes to specify the file to download and the browse button 51 is operated by the logged-in user when he or she wishes to direct the location where to output the downloaded file. The start button 52 is operated to start the download. The logged-in user presses the browse button 50, and a list of the files stored on the web server 2 is shown, for instance. The logged-in user selects a file that he or she wishes to download from the list.

The logged-in user presses the browse button 51 to direct the location where to output the downloaded file. As the storage region 24 which is inaccessible to the unauthorized user is directed as the location where to output the downloaded file by the logged-in user, the second browser 35b outputs the access request DA to the controller 33 as already described above. When the access is permitted by the controller 33, the second browser 35b accesses the storage region 24 and configures the storage region 24 as the location to store the downloaded file.

As explained above, the storage region 24 includes the plurality of storage regions 24a, 24b and 24c. For such storage region 24, the second browser 35b shows all the plurality of storage regions 24a, 24b and 24c in the listed form. As a storage region of the plurality of storage regions 24a, 24b and 24c is selected by the logged-in user, the second browser 35b performs the above-described user authentication. If the user authentication results in success, the second browser 35b configures the storage region selected by the logged-in user as the location to store the downloaded file.

Some logged-in users direct the storage region 23 which is accessible to every user as the location where to output the download file. Or, some logged-in users direct the printer section 16 as the location where to output the download file so as to produce the printed output based on the downloaded file.

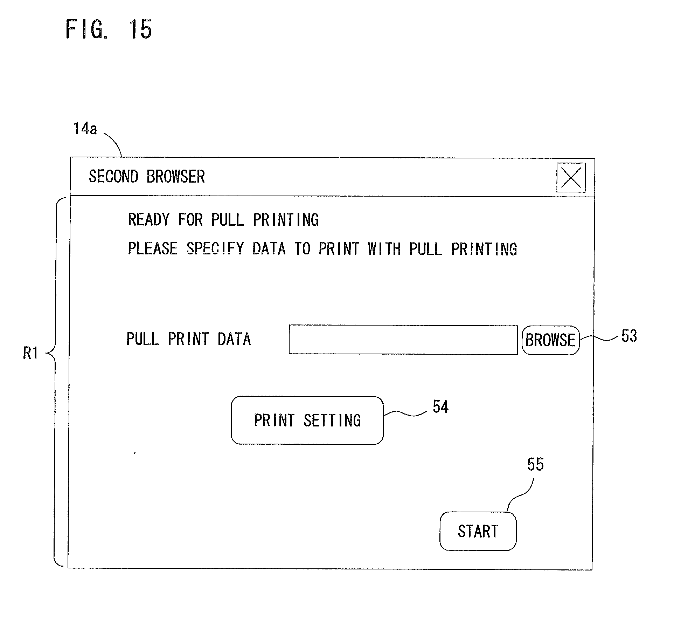

The second browser 35b has the feature of pull printing that reads the data D1 in the storage region 23 or 24 and produces the read data as the printed outputs, for example. Fig. 15 is an example of the display screen image displayed on the display unit 14a when the second browser 35b makes the printed outputs produced with the pull printing. This display screen image is stored in advance in the predetermined storage region in the storage device 13 as a web page, for example. The second browser 35b acquires the display screen image automatically and makes the acquired display screen image displayed on the display unit 14a.

The display screen image of Fig. 15 shows a browse button 53, a print setting button 54 and a start button 55. The browse button 53 is operated by the logged-in user when he or she wishes to specify the data to print with the pull printing and the print setting button 54 is operated by the logged-in user when he or she wishes to configure the detailed settings for printing. The start button 55 is operated to start the execution of the job with the pull printing. The logged-in user presses the browse button 53, and he or she may select either of the storage region 23 or 24, for example. After the storage region 24 is selected by the logged-in user, the access request DA is output to the controller 33 by the second browser 35b as explained above. When the access is permitted by the controller 33, the second browser 35b accesses the storage region 24 and configures the data D2 in the storage region 24 as the data to be printed with the pull printing. For the access to the storage region 24 with the plurality of storage regions 24a, 24b and 24c, the second browser 35b performs the user authentication, which is the same as the above case.

The detailed settings for printing are configured after the print setting button 54 is pressed by the logged-in user. The start button 55 is then pressed, the second browser 35b gives the instruction to execute the job to the printer section 16 via the controller 33. As a result, the printer section 16 produces the printed outputs based on the data D2 specified by the logged-in user.

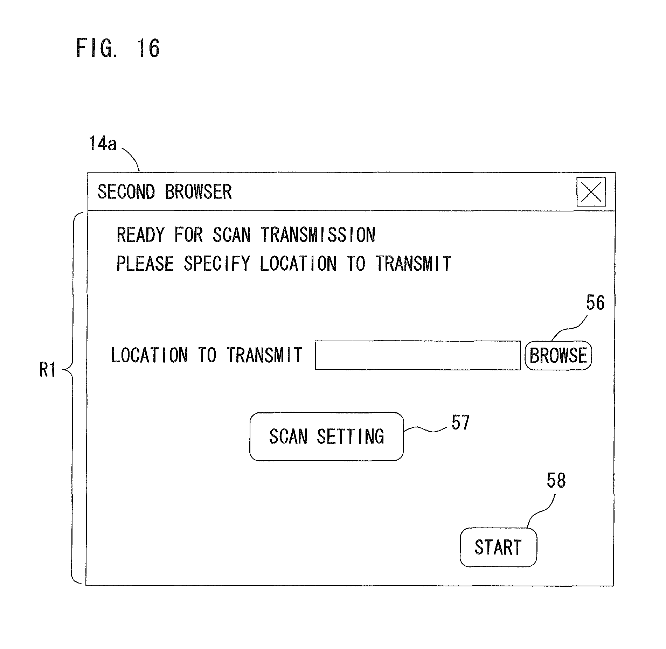

The second browser 35b has the feature of scan transmission that reads the document with the scan function and transmits the image data generated by reading the document to the address designated by the logged-in user by working together with the scan function, for example. Fig. 16 is an example of the display screen image displayed on the display unit 14a for scan transmission by the second browser 35b. This display screen image is also stored in advance in the predetermined storage region in the storage device 13 as the web page, for example. The second browser 35b acquires the display screen image automatically and makes the acquired display screen image displayed on the display unit 14a.

The display screen image of Fig. 16 shows a browse button 56, a scan setting button 57 and a start button 58. The browse button 56 is operated by the logged-in user when he or she wishes to designate the address to which the data is sent with the scan transmission and the scan setting button 57 is operated by the logged-in user when he or she wishes to configure the detailed settings for document reading. The start button 58 is operated to start the execution of the job relating to the scan transmission. The logged-in user presses the browse button 56, and he or she may designate the address to which the data is sent with the scan transmission. The data may be addressed to either of the storage region 23 or 24, for example. In response to designation of the storage region 23 or 24 as the address, the second browser 35b configures to store the image data generated by the scan section 15 by reading the document in the designated storage region. When, for example, the storage region 24 is selected by the logged-in user as the address, the second browser 35b outputs the access request DA to the controller 33 as explained above. When the access is permitted by the controller 33, the second browser 35b accesses the storage region 24 and configures to store the image data in the storage region 24. For the access to the storage region 24 with the plurality of storage regions 24a, 24b and 24c, the second browser 35b performs the user authentication, which is the same as the above cases.

The detailed settings for the document reading are configured after the scan setting button 57 is pressed by the logged-in user. The start button 58 is then pressed, the second browser 35b gives the instruction to execute the job to the scanner section 15 via the controller 33. As a result, the image data generated by the scan section 15 may be output to the address designated by the logged-in user.

As explained above, the image processing device 1 of the present preferred embodiment is provided with the first browser 35a and the second browser 35b. The first browser 35a has the feature that accesses the external web server 2 over the network 3 and acquires the web page from the web server 2 to make the acquired web page displayed on the display unit 14a. The second browser 35b has the feature that does not only access the external web server 2 over the network 3 and acquire the web page from the web server 2 to make the acquired web page displayed on the display unit 14a but also that is allowed to access the predetermined storage region 24. For activation of the browser function, the image processing device 1 starts up either the first browser 35a or the second browser 35b. The access request for the storage region 24 may be received from the browser 35 while the browser 35 is running in response to the startup of either the first browser 35a or the second browser 35b. In this case, the received access request is permitted only when the running browser 35 is the second browser 35b.

Some users who are not authorized to access the storage region 24 may enter the address to access the storage region 24 by manual on the first browser 35a while the first browser 35a is running, for instance. According to the configuration described above, even in such a case, the access to the storage region 24 by the first browser 35a may be prevented. The unauthorized access to the storage region 24 is allowed to be restricted and the security may be ensured.

The image processing device 1 of the present preferred embodiment configures the mode information 34 showing which one of the first browser 35a and the second browser 35b should be started up at the startup of the browser 35. In response to the access request for the storage region 24 from the browser 35 after the startup of the browser 35, the image processing device 1 determines whether or not the second browser 35b is running based on the mode information 34 configured at the startup of the browser 35. The access request is permitted only when the access request is sent by the second browser 35b.

When, therefore, the access request for the storage region 24 is received, it enables to determine accurately that the browser 35 running on the image processing device 1 is which of the first browser 35a and the second browser 35b. Especially this determination does not require any complicated process. So, the determination may be made efficiently and accurately.

The image processing device 1 of the present preferred embodiment includes the user authentication part 30 that performs the user authentication to identify the user who uses the image processing device 1. For the startup of the browser 35, the second browser 35b is started up only when the predetermined user who is authorized to use the second browser 35b is successfully authenticated by the user authentication part 30. In other terms, when the predetermined user who is authorized to use the second browser 35b is failed to be authenticated by the user authentication part 30, the second browser 35b is restricted to start up and only the first browser 35a is started up.

The user who is unauthorized to access the storage region 24 is allowed to use only the first browser 35a. To be more specific, it makes possible to prevent the second browser 35b from being used by the user who is unauthorized to access the storage region 24. The unauthorized access to the storage region 24 may be prevented successfully.

The second browser 35b included in the image processing device 1 of the present preferred embodiment has the feature that reads the data stored in the predetermined storage region 24 and makes the read data displayed on the display unit 14a. The user who is authorized to access the storage region 24 is allowed to view the confidential information in the storage region 24 displayed on the display unit 14a by starting up the second browser 35b. The user who is unauthorized to access the storage region 24 is restricted to view the confidential information stored in the storage region 24.

The second browser 35b of the preferred embodiment has the feature that stores the data in the predetermined storage region 24. The user who is authorized to access the storage region 24 is allowed to store the variety of information such as the confidential information in the storage region 24 by starting up the second browser 35b. The user who is unauthorized to access the storage region 24 is restricted to store the data in the storage region 24.

The image processing device 1 of the present preferred embodiment includes the printer section 16 that produces the printed outputs. The second browser 35b has the feature that reads the data in the storage region 24 and outputs the read data to the printer section 16, thereby making the printer section produce the printed outputs. The user who is authorized to access the storage region 24 is allowed to take the printed outputs produced based on the data stored in the storage region 24 by starting up the second browser 35b. The user who is unauthorized to access the storage region 24 is restricted to take such printed outputs.

The image processing device 1 of the present preferred embodiment includes the scanner section 15 that generates the image data by reading the document. The second browser 35b has the feature that gives the instruction to read the document to the scanner section 15 and stores the image data generated by the scanner section 15 in the storage region 24. The user who is authorized to access the storage region 24 is allowed to make the document in which the confidential information is contained read with the scanner section 15 and store the generated image data in the storage region 24 as it is by starting up the second browser 35b. The user who is unauthorized to access the storage region 24 is restricted to start the second browser 35b up. So, the user is not allowed to make the image processing device 1 perform such processing.

As described above, the access request for the predetermined storage region may be received from the running browser while the first or the second browser is running. In this case, the access request is permitted only when the current running browser is the second browser. Even when, therefore, the access request for the predetermined storage region is received while the first browser is running, the access request is not permitted. Some users who are unauthorized to access may enter the address of the predetermined storage region by manual while the first browser is running. Even in such a case, the above-mentioned unauthorized access is restricted, so that the security may be ensured.

While the preferred embodiment of the present invention has been described above, the present invention is not intended to be confined to the details shown above. According to the present preferred embodiment, for example, the image processing device 1 includes more than one function such as the copy function, the scan function, the print function, the facsimile function and the browser function. More than one functions provided by the image processing device 1 may include other functions other than the above-mentioned ones. Further, the image processing device 1 is not required to include all of the above-mentioned functions, and at least one of the above-mentioned functions may not be included.

The program 20 of the present preferred embodiment makes the CPU 10 of the image processing device 1 serve as the user authentication part 30, the browser boot part 31 and the controller 33 is preinstalled in the storage device 13. The program 20, however, may have a chance for an update such as a version up after the image processing device 1 is shipped into the market. As of the shipment, the program 20 is preinstalled on the image processing device 1. In such a case, the program 20 is updated to the latest program which covers the modifications after the shipment. The program 20 for the update may be provided online over the network 3. Or rather, the program 20 for the update may be provided with a computer readable recording medium such as a CD-ROM or a USB memory storing therein.

Only the second browser 35b works together with each function on the image processing device 1 according to the present preferred embodiment. The first browser 35a may works together with each function on the image processing device 1 as well as the second browser 35b. In such a case, however, the access to the storage region 24 inaccessible to the unauthorized user while the first browser 35a is running should be restricted.

According to the present preferred embodiment, a browser program 22 that serves as the second browser 35b is installed on the image processing device 1. More than one browser program 22 that serves as the second browser 35b may be installed on the image processing device 1. Each of the more than one browser program 22 may be linked one by one to the respective functions such as the copy function, the scan function, the print function and the facsimile function, for instance. The display screen images of Figs. 13, 14, 15 and 16 may be displayed on the display unit 14a in response to execution of the respective browser programs 22 of more than one browser program 22 installed on the image processing device 1.

## Claims

1. An image processing device (1), comprising:
a display part (14a) on which various types of information are displayed;
a storage part (13) for storing therein a variety of data;
a first browser (35a) for accessing an external server (2) over a network (3) and acquiring a web page from the external server (2), thereby causing said display part (14a) to display the acquired web page;
a second browser (35b) for accessing the external server (2) over said network (3) and acquiring the web page from the external server (2), thereby causing said display part (14a) to display the acquired web page, and that is permitted to access a predetermined storage region (24) in said storage part (13); and
a browser boot part (31) for starting up any one of said first and second browsers (35a, 35b),
**characterized in that** the image processing device (1) further comprises
a controller (33) for permitting an access request for said predetermined storage region (24) in response to receipt of the access request from the running browser (35) only when the browser (35) running by said browser boot part (31) is said second browser (35b).

2. The image processing device (1) according to claim 1, wherein
said browser boot part (31) configures mode information (34) that shows which of said first and second browsers (35a, 35b) should be started up at startup of the browser (35), and
said controller (33) permits the access request for said predetermined storage region (24) based on said mode information (34) in response to receipt of the access request from said second browser (35b).

3. The image processing device (1) according to claim 1 or 2, further comprising:
an authentication part (30) for authenticating a user, wherein
said browser boot part (31) starts up said second browser (35b) only when the predetermined user who is authorized to use said second browser (35b) is successfully authenticated by said authentication part (30).

4. The image processing device (1) according to claim 3, wherein
said browser boot part (31) starts up only said first browser (35a) when the predetermined user who is authorized to use said second browser (35b) is failed to be authenticated by said authentication part (30).

5. The image processing device (1) according to one of claims 1 to 4, wherein
said second browser (35b) has a displaying function that reads the data stored in said predetermined storage region (24) and causes said display part (14a) to display the read data.

6. The image processing device (1) according to one of claims 1 to 5, wherein
said second browser (35b) has a storing function that stores the data in said predetermined storage region (24).

7. The image processing device (1) according to one of claims 1 to 6, further comprising:
a printer part (16) for producing printed outputs, wherein
said second browser (35b) has a printing function that reads the data stored in said predetermined storage region (24) and outputs the read data to said printer part (16), thereby causing said printer part (16) to produce the printed outputs.

8. The image processing device (1) according to one of claims 1 to 7, further comprising:
a scanner part (15) for generating image data by reading a document, wherein
said second browser (35b) has a scan transmission function that gives an instruction to read the document to said scanner part (15) and stores the image data generated by said scanner part (15) in said predetermined storage region (24).

9. An access control method for controlling an access to a predetermined storage region (24) on an image processing device (1) that includes a first browser (35a) accesses an external server (2) over a network (3) and acquires a web page from the external server (2), thereby causing a predetermined display part (14a) to display the acquired web page and a second browser (35b) which accesses the external server (2) over said network (3) and acquires the web page from the external server (2), thereby causing said display part (14a) to display the acquired web page and which is permitted to access said predetermined storage region (24),
**characterized in that** the access control method comprises the steps of:
(a) starting up any one of said first and second browsers (35a, 35b); and
(b) permitting an access request for said predetermined storage region (24) in response to receipt of the access request from the browser (35) started up in said step (a) only when the running browser (35) is said second browser (35b).

10. The access control method according to claim 9, further comprising the step of:
(c) configuring mode information (34) that shows which of said first and second browsers (35a, 35b) should be started up at startup of the browser (35) in said step (a), wherein
in said step (b), the access request is permitted based on said mode information (34) only when the access request is received from said second browser (35b).

11. The access control method according to claim 9 or 10, further comprising the step of:
(d) authenticating a user, wherein
in said step (a), said second browser (35b) is started up only when the predetermined user who is authorized to use said second browser (35b) is successfully authenticated in said step (d).

12. The access control method according to claim 11, wherein
in said step (a), only said first browser (35a) is started up when the predetermined user who is authorized to use said second browser (35b) is failed to be authenticated in said step (d).

13. A computer readable recording medium on which a program is recorded executable by an image processing device (1) that includes a first browser (35a) accesses an external server (2) over a network (3) and acquires a web page from the external server (2), thereby causing a predetermined display part (14a) to display the acquired web page and a second browser (35b) which accesses the external server (2) over said network (3) and acquires the web page from the external server (2), thereby causing said display part (14a) to display the acquired web page and which is permitted to access a predetermined storage region (24),
**characterized in that** said program causes said image processing device (1) to execute the steps of:
(a) starting up any one of said first and second browsers (35a, 35b); and
(b) permitting an access request for said predetermined storage region (24) in response to receipt of the access request from the browser (35) started up in said step (a) only when the running browser (35) is said second browser (35b).

14. The computer readable recording medium according to claim 13, said program causing said image processing device (1) to further execute the step of:
(c) configuring mode information (34) that shows which of said first and second browsers (35a, 35b) should be started up at startup of the browser (35) in said step (a), wherein
in said step (b), the access request is permitted based on said mode information (34) only when the access request is received from said second browser (35b).

15. The computer readable recording medium according to claim 13 or 14, said program causing said image processing device (1) to further execute the step of
(d) authenticating a user, wherein
in said step (a), said second browser (35b) is started up only when the predetermined user who is authorized to use said second browser (35b) is successfully authenticated in said step (d).

16. The computer readable recording medium according to claim 15, wherein
in said step (a), only said first browser (35a) is started up when the predetermined user who is authorized to use said second browser (35b) is failed to be authenticated in said step (d).
